# EUROPÄISCHE PATENTSCHRIFT

(11) **EP 4 519 522 B1**
(45) Veröffentlichungstag und Bekanntmachung des Hinweises auf die Patenterteilung: **29.04.2026**
(21) Anmeldenummer: 23717816.5
(22) Anmeldetag: 12.04.2023
(51) Int. Cl.: E04F 21/18, B66C 1/02, B25J 15/06, B65G 47/91

(54) **UNTERDRUCKHANDHABUNGSVORRICHTUNG MIT EINEM HOHLPROFIL**
VACUUM MANIPULATOR HAVING A HOLLOW PROFILE
MANIPULATEUR SOUS VIDE AYANT UN PROFIL CREUX

(30) Priorität: 06.05.2022 AT 503182022
(43) Veröffentlichungstag der Anmeldung: 12.03.2025
(73) Patentinhaber: Kaliauer GmbH, 4702 Wallern (AT)
(72) Erfinder: KALIAUER, Roland, 4702 Wallern (AT)
(74) Vertreter: Hübscher & Partner Patentanwälte GmbH
(86) Internationale Anmeldenummer: PCT/AT2023/060124
(87) Internationale Veröffentlichungsnummer: WO 2023/212759

(56) Entgegenhaltungen:
- EP-A1- 3 702 105
- DE-U1- 202014 001 842
- US-A1- 2003 235 491

## Beschreibung

### Technisches Gebiet

Die Erfindung bezieht sich auf eine Unterdruckhandhabungsvorrichtung.

### Stand der Technik

Derartige bekannte Unterdruckhandhabungsvorrichtungen erleichtern eine Handhabung von Platten oder Fliesen, also beispielsweise das Verladen, den Transport zum Verlegeort, ein Halten der Platten oder Fliesen während einer Benetzung mit einem Kleber, und ein Ansetzen an eine Verlegefläche sowie ein abschließendes Verlegen, erheblich. Eine derartige Unterdruckhandhabungsvorrichtung ist beispielsweise aus der DE 202014001842 U1 bekannt. Es handelt sich dabei um einen Hebe- und Verlegerahmen für großformatige Fliesen bzw. Platten, der über Sauggreifer einen permanenten Unterdruck auf das zu transportierende Gut ausübt und der eine variable Größe aufweist, wozu die Rahmenteile ineinanderschiebbar sind. Am Hebe- und Verlegerahmen sind alle technischen Komponenten, wie Akku, Vakuumpumpen, Vakuumverteiler und Sauggreifer am Rahmen angebracht. Die Unterdruckhandhabungsvorrichtungen kann damit kabelfrei im Außen- und Innenbereich betrieben werden. Derartige handelsübliche Montagerahmen sind schwer, und können an Baustellen kaum ohne Hebehilfsmittel verwendet werden.

Eine weitere derartige Verlegehilfe mit Handpumpsaugern offenbart die EP 3702105 A1, die zwar ein günstiges Handhabungsgewicht aufweist, aber einen erheblichen Manipulationsaufwand erfordert. Das erforderliche manipulieren und kontrollieren der Pumpsauger ist zeitaufwändig und erschwert die Verwendung auf der Baustelle erheblich.

Darüber hinaus beschreibt die US 2003/235491 A1 eine Unterdruckhandhabungsvorrichtung mit einem Hohlprofil dem wenigstens zwei Sauggreifer zugeordnet sind. Diese sind über eine Unterdruckleitung mit Unterdruck beaufschlagbar. Somit ist eine Vorrichtung gemäss dem Oberbegriff des Anspruchs 1 aus D1 bekannt.

### Darstellung der Erfindung

Der Erfindung liegt somit die Aufgabe zugrunde, einem Benutzer insbesondere bei geringem Platzangebot bei der Handhabung von Platten oder Fliesen gleichzeitig ein einfaches Transportieren der Platte bzw. Fliese und ein einfaches Bedienen und gegebenenfalls Austauschen der Saugvorrichtung zu ermöglichen.

Die Erfindung löst die gestellte Aufgabe durch die Merkmale des Anspruchs 1. Zufolge dieser Maßnahmen kann der Benutzer während der Handhabung die Saugvorrichtung, welche vorzugsweise ein Akku-Saugheber ist, mit einer Hand bedienen und als Handgriff für die Unterdruckhandhabungsvorrichtung nutzen, während die zweite Hand diese an einer weiteren Stelle hält. Dies ermöglicht nicht nur ein einfaches Transportieren der Platte bzw. Fliese, sondern ermöglicht auch während der Handhabung ein schnelles Ein- und Ausschalten des Unterdrucks, was insbesondere die Übergabe oder Ablage der Platte bzw. Fliese erleichtert. Durch die Verwendung des Hohlprofils ist das Gewicht der Unterdruckhandhabungsvorrichtung verhältnismäßig gering, was eine bequemere Handhabung durch den Benutzer ermöglicht. Trotz des geringen Gewichts ist das Hohlprofil aber insoweit stabil, als dass das Hohlprofil keinen größeren Rahmen bilden muss, um das Gewicht der Platte bzw. Fliese schonend in die Unterdruckhandhabungsvorrichtung einzuleiten. In einer bevorzugten Ausführungsform ist das Hohlprofil länglich, wodurch die Dimensionen der Unterdruckhandhabungsvorrichtung, selbst mit angesaugter Platte bzw. Fliese, geringgehalten werden können. Die Unterdruckleitung verläuft von der Grundplatte, wo sie über die Andockfläche mit der Saugvorrichtung fluidverbunden ist, durch die Grundplatte, durchbricht diese also, und führt weiter zu den Sauggreifern. Die Sauggreifer sind ebenfalls mit der Unterdruckleitung fluidverbunden, sodass diese mit Unterdruck beaufschlagt werden können, um die Platte bzw. Fliese über den applizierten Unterdruck anzuheben. Die Grundplatte mit der Andockfläche ermöglicht also nicht nur das stabile Lagern der Saugvorrichtung sondern auch die Fluidverbindung zwischen Saugvorrichtung und Sauggreifer über die Unterdruckleitungen. Weiters kann die Saugvorrichtung reversibel festlegbar sein, was nicht nur ein Wechseln der Saugvorrichtung zur Anpassung an die jeweilige handzuhabende Platte bzw. Fliese, sondern auch die Wartung, Transport und Demontage der Unterdruckhandhabungsvorrichtung erleichtert. In diesem Fall ist auch die Fluidverbindung zwischen Saugvorrichtung und den Sauggreifern reversibel lösbar. Um zu verhindern, dass im Betrieb die Unterdruckleitung beschädigt oder gar gekappt wird, was in einem Lösen der Platte bzw. Fliese resultieren würde, ist die Unterdruckleitung in einer bevorzugten Ausführungsform wenigstens teilweise innerhalb des Hohlprofils angeordnet. In einer besonders einfachen Ausführungsform kann die Grundplatte und die Andockfläche direkt vom Hohlprofil ausgebildet werden. Die Saugvorrichtung kann beispielsweise ein Saugheber sein. In einer bevorzugten Ausführungsform ist die Saugvorrichtung batteriebetrieben, um die Bewegungsfreiheit des Benutzers bei der Handhabung zu erhöhen. Zwar kann mit der Saugvorrichtung alleine bereits Unterdruck auf eine Platte bzw. Fliese appliziert werden um diese zu transportieren, allerdings kann der durch die Saugvorrichtung erzeugte Unterdruck in Kombination mit der erfindungsgemäßen Unterdruckhandhabungsvorrichtung auf eine größere Saugfläche verteilt und damit die Hebekraft erhöht werden. Um die Hebekraft weiter zu erhöhen, bzw. um Fliesen oder Platten mit großer Oberfläche mit geringem Beschädigungsrisiko zu transportieren, können zwei oder mehrere Unterdruckvorrichtungen zur Ausbildung eines Tragerahmens über Verbindungsstreben aneinander festgelegt werden. Durch die Verbindungsstreben können Kräfte quer zur Saugrichtung in die Verbindungsstreben eingeleitet werden und Torsionsmomente auf die Platte bzw. Fliese verringert werden. Die Hohlprofile der verbundenen Unterdruckhandhabungsvorrichtungen bilden dann zusammen mit den Verbindungsstreben den Tragerahmen.

Um die Verbindung zwischen der Unterdruckleitung und der Saugvorrichtung zu vereinfachen, insbesondere, wenn die Saugvorrichtung neu angeschlossen bzw. ausgetauscht wird, wird vorgeschlagen, dass die Unterdruckleitung wenigstens einen an der Grundplatte befestigten Anschlussnippel und wenigstens eine an den Anschlussnippel angeschlossene Unterdruckleitung umfasst. Über den Anschlussnippel kann die Unterdruckleitung reversibel an die Saugvorrichtung angeschlossen werden. Der Anschlussnippel dient weiters als Adapter da über ihn die Unterdruckleitung passgenau in den Ausgang der Saugvorrichtung eingesetzt werden kann. In einer bevorzugten Ausführungsform ist der Anschlussnippel reversibel an der Grundplatte befestigt, sodass bei einem Wechsel der Saugvorrichtung auch dieser an den Ausgang der Saugvorrichtung angepasst werden kann. Der befestigte Anschlussnippel kann weiter die an ihn angeschlossene Unterdruckleitung räumlich ausrichten, wodurch Knicke und daraus resultierende Unterbrechungen der Fluidverbindungen vermieden werden können.

Um zu verhindern, dass sich aufgrund einer Fehlfunktion der Unterdruckleitung während der Handhabung eine Platte bzw. Fliese löst, kann je Sauggreifer eine Unterdruckleitung an die Grundplatte angeschlossen sein. In diesem Fall kann, selbst wenn über einen Sauggreifer kein Unterdruck mehr appliziert werden kann, die Platte bzw. Fliese noch zumindest notdürftig über die Sauggreifer gehalten werden, deren separate Unterdruckleitung nach wie vor funktionsfähig ist. Es wird also vermieden, dass mehrere Sauggreifer über dieselbe Unterdruckleitung mit Unterdruck beaufschlagt werden, denn dies würde bei einer Fehlfunktion dieser einzigen Unterdruckleitung in einem kompletten Lösen der Platte bzw. Fliese resultieren. Zusätzlich erleichtert dies die Fehlererkennung und Wartung defekter Unterdruckleitungen, da nur die jeweilige beschädigte Unterdruckleitung gewechselt werden muss, ohne Manipulationen an den anderen Sauggreifern bzw. Unterdruckleitungen erforderlich zu machen.

Auch die Sauggreifer können, je nach zu handhabender Platte bzw. Fliese einfach ausgewechselt werden, wenn die Unterdruckleitung je Sauggreifer einen im Hohlprofil über dem Sauggreifer befestigten Sauggreiferanschlussnippel umfasst, der in das Innere des Sauggreifers ausmündet. Auch hier bietet der befestigte Sauggreiferanschlussnippel die Möglichkeit, die an ihn angeschlossene Unterdruckleitung räumlich festzulegen, wodurch ein Knicken und daraus resultierende Unterbrechungen der Fluidverbindungen vermieden werden können. Die Sauggreiferanschlussnippel können so sowohl als Befestigungsmittel für die Sauggreifer, als auch als Fluidverbindung für die Unterdruckleitung dienen, sodass eine verbesserte, nach außen hin dichte Fluidverbindung entsteht.

Um diejenigen Komponenten der Unterdruckhandhabungsvorrichtung einfach zu warten, die im Inneren des Hohlprofils angeordnet sind, kann das Hohlprofil auf der den Sauggreiferanschlussnippeln gegenüberliegenden Hohlprofilseite als Wartungsöffnungen dienende Durchbrüche aufweisen. Diese Wartungsöffnungen sind durch ihre Anordnung auf der den Sauggreiferanschlussnippeln gegenüberliegenden Hohlprofilseite selbst dann zugänglich, wenn gerade eine Platte bzw. Fliese mit Unterdruck beaufschlagt wird. Insbesondere wenn die Unterdruckleitung wenigstens teilweise innerhalb des Hohlprofils angeordnet ist, erleichtern die Wartungsöffnungen die Zugänglichkeit zu der Unterdruckleitung, insbesondere für Anschlussarbeiten an den Sauggreiferanschlussnippeln. Darüber hinaus kann über die Wartungsöffnungen eine Gewichtsersparnis bei annähernd gleichbleibender Stabilität des Hohlprofils erreicht werden.

Zusätzlich zu den oben beschriebenen Vorteilen der Verwendung von Anschlussnippeln, können die Anschlussnippel der Sauggreifer je über eine Unterdruckleitung mit einem Sauggreiferanschlussnippel verbunden sein. Dadurch kann die Unterdruckleitung separat von den Anschlussnippeln gewartet und/oder ausgetauscht werden.

Die Größe und Gestalt des Sauggreifers kann an die Dimensionen des Hohlprofils angepasst werden, wenn die Sauggreifer am Hohlprofil angeordnete, eine Saugglocke um ein Saugloch einfassende Dichtungsprofile umfassen. So müssen keine vorgefertigten, standardisierten Sauggreifer eingesetzt werden, sondern es können die Dichtungsprofile je nach Bedarf am Hohlprofil angeordnet werden, solange diese einen erfindungsgemäßen Sauggreifer bilden. Ein weiterer Vorteil dabei ist, dass das Hohlprofil selbst einen Teil des Sauggreifers bilden kann, wodurch der erzeugte Unterdruckbereich unmittelbar an der Platte bzw. Fliese direkt am Hohlprofil anschließt. In diesem Fall sind auch keine Anschlussnippel vonnöten, da keine fluiddichte Kupplung zwischen der Unterdruckleitung und einem gesonderten Sauggreifer hergestellt werden muss, sondern die Unterdruckleitung kann direkt in das Saugloch münden.

Die Saugvorrichtung kann besonders stabil und reversibel auf der Andockfläche festgelegt werden, wenn das Haltemittel zum Festlegen der Saugvorrichtung auf der Andockfläche wenigstens ein von der Grundplatte aufragender Haltebügel ist, der vorzugsweise über eine Schraubverbindung, mit der Saugvorrichtung lösbar verbunden ist. Die Schraubverbindung verhindert insbesondere bei einer Drehung der Unterdruckhandhabungsvorrichtung Relativbewegungen zwischen der Saugvorrichtung und dem Hohlprofil, die in Druckfluktuationen in der Unterdruckleitung resultieren könnten.

Alternativ dazu kann die Saugvorrichtung besonders einfach und reversibel auf der Andockfläche festgelegt werden, wenn das Haltemittel zum Festlegen der Saugvorrichtung auf der Andockfläche wenigstens ein die Grundplatte und die Saugvorrichtung umfassender Gurt ist, der vorzugsweise über eine Spannvorrichtung verfügt. So kann die Saugvorrichtung ohne weitere Werkzeuge festgelegt werden. Weiters ist es möglich, Unterdruckhandhabungsvorrichtung mit mehreren Haltemitteln zu versehen, wovon beispielsweise eines ein die Saugvorrichtung umfassender Gurt ist und das andere ein von der Grundplatte aufragender Haltebügel ist. In beiden Fällen wird die Saugvorrichtung auch dann an der Andockfläche festgelegt, wenn die Saugvorrichtung ausgeschaltet ist, also keinen Unterdruck erzeugt.

Die Unterdruckhandhabungsvorrichtung kann ohne unbeabsichtigte Manipulation der Saugvorrichtung selbst bei auf eine Platte bzw. Fliese appliziertem Unterdruck angehoben werden, wenn seitlich des Hohlprofils und unterhalb der Grundplatte, Grundplatte und Hohlprofil verbindende Hohlprofilsegmente vorgesehen sind, die eine Anschlagmittelaufnahme zum Anheben der Unterdruckhandhabungsvorrichtung ausbilden. Dabei empfiehlt es sich, das Anschlagmittel in den Hohlraum der Hohlprofilsegmente einzuführen, da diese dadurch quer zur Anheberichtung Anschläge ausbilden. Durch die seitliche Anordnung kann verhindert werden, dass beim Anheben eine lösende Kraft zwischen Saugvorrichtung und Grundplatte wirkt, aufgrund derer die korrekte Applikation des Unterdrucks beeinträchtigt wird. Weiters bleibt durch die Anordnung der Hohlprofilsegmente die Saugvorrichtung und etwaige Wartungsöffnungen auch während des Anhebens zugänglich.

### Kurze Beschreibung der Erfindung

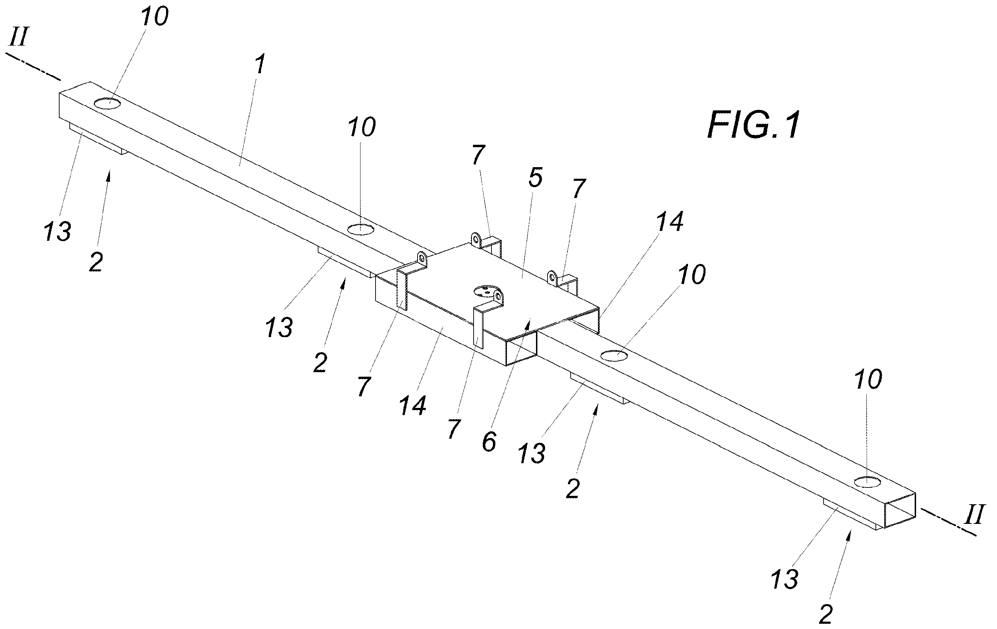

In der Zeichnung ist der Erfindungsgegenstand beispielsweise dargestellt. Es zeigen
- Fig. 1: eine perspektivische Ansicht der Unterdruckhandhabungsvorrichtung
- Fig. 2: einen Schnitt durch eine Unterdruckhandhabungsvorrichtung entlang der Linie II - II der Fig. 1 mit Saugvorrichtung und angesaugter Platte und

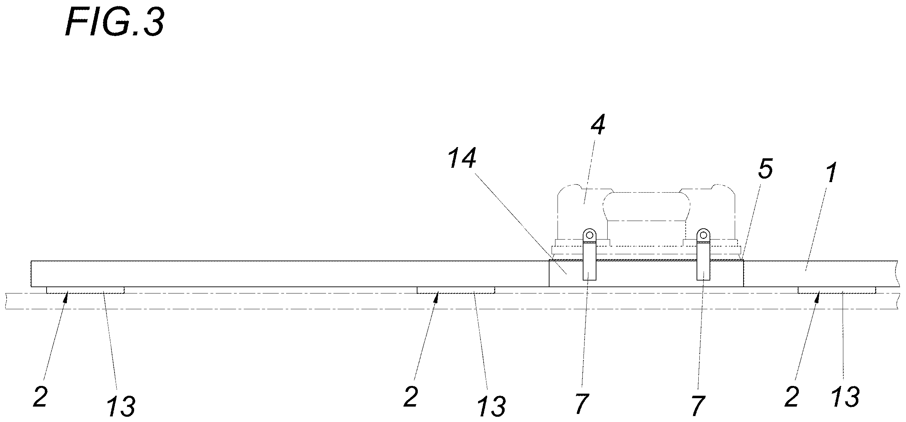

- Fig. 3: eine Seitenansicht der Unterdruckhandhabungsvorrichtung mit angesaugter Platte.

### Wege zur Ausführung der Erfindung

Eine erfindungsgemäße Unterdruckhandhabungsvorrichtung umfasst ein bevorzugter Weise längliches Hohlprofil 1, das entlang einer Hohlprofilunterseite wenigstens zwei Sauggreifer 2 aufweist. Diese Sauggreifer 2 sind an eine Unterdruckleitung 3 angeschlossen, über die sie mit einer Saugvorrichtung 4 fluidverbunden werden können, sodass die Sauggreifer 2 von der Saugvorrichtung 4 über die Unterdruckleitung 3 mit Unterdruck beaufschlagt werden können. Die Saugvorrichtung 4 wird an einer Grundplatte 5 angeordnet und festgelegt, wobei die Grundplatte 5 eine Andockfläche 6 aufweist. Die Unterdruckleitung 3 wird durch die Grundplatte 5 geführt und über die Andockfläche 6 mit der Saugvorrichtung 4 wirkverbunden, sodass die erfindungsgemäße Fluidverbindung zum Erzeugen des Unterdrucks hergestellt werden kann. Um die Saugvorrichtung 4 auf der Grundplatte 5 festzulegen, sind Haltemittel 7 vorgesehen, beispielsweise ein Haltebügel mit Schraubverbindung zur Saugvorrichtung 4, wie in der Zeichnung gezeigt.

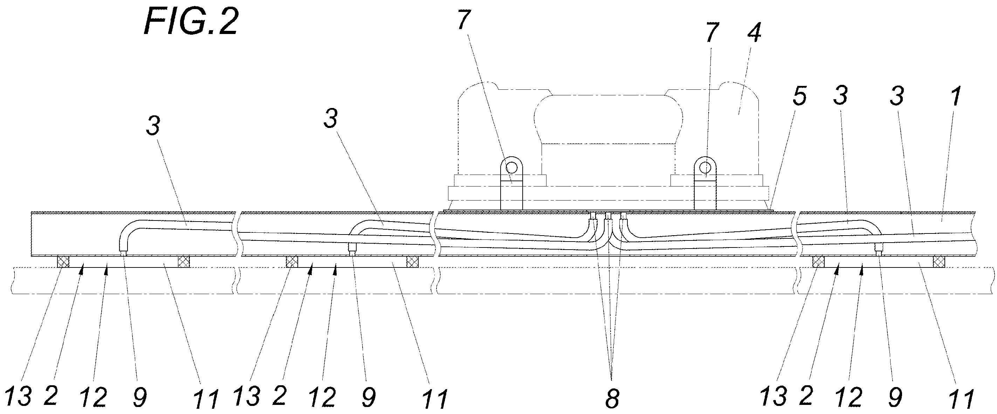

Um die Unterdruckleitung 3 an die Saugvorrichtung 4 anzuschließen, kann wenigstens ein auf der Grundplatte 5 angeordneter Anschlussnippel 8 vorgesehen sein. Der Anschlussnippel 8 stellt die fluiddichte Verbindung zwischen Unterdruckleitung 3 und Saugvorrichtung 4 her, wobei der Anschlussnippel 8 auf der einen Seite auf das Material und den Durchmesser der Unterdruckleitung 3 und auf der anderen Seite auf den Ausgang der Saugvorrichtung 4 angepasst sein kann. Auf dieselbe Weise kann sauggreiferseitig ein Sauggreiferanschlussnippel 9 vorgesehen sein, der in das Innere des Sauggreifers 2 mündet. Dieser Sauggreiferanschlussnippel 9 kann sowohl die Fluidverbindung zum Sauggreifer 2 als auch dessen mechanische Verbindung zum Hohlprofil herstellen. In einer bevorzugten Ausführungsform können die Anschlussnippel 8 und die Sauggreiferanschlussnippel 9 von gleicher Bauart sein. Auch kann die Unterdruckleitung 3 an je einer Seite mit einem Anschlussnippel 8 und an der anderen Seite mit einem Sauggreiferanschlussnippel 9 verbunden sein. Wie der Fig. 2 entnommen werden kann, ist im gezeigten Ausführungsbeispiel je ein Sauggreifer 2 über eine Unterdruckleitung 3 an die Grundplatte 5 angeschlossen, da so bei einem Ausfall einer Unterdruckleitung 3 nur ein Sauggreifer 2 betroffen ist.

Um die Zugänglichkeit zu den Bauteilen zu ermöglichen, die innerhalb des Hohlprofils 1 angeordnet sind, können Wartungsöffnungen 10 vorgesehen sein, die an der den Sauggreiferanschlussnippeln 9 gegenüberliegenden Hohlprofilseite angeordnet sind. Diese Wartungsöffnungen 10 ermöglichen selbst während der Handhabung die Zugänglichkeit zu der den Sauggreiferanschlussnippeln 9 und der Unterdruckleitung 3.

Die Sauggreifer 2 können teilweise vom Hohlprofil 1 mitausgebildet werden, wenn die Sauggreifer 2 am Hohlprofil 1 angeordnete, eine Saugglocke 11 um ein Saugloch 12 einfassende Dichtungsprofile 13 umfassen. So kann die Größe des Sauggreifers 2 an die Dimensionen des Hohlprofils 1 angepasst werden. Außerdem können seitlich des Hohlprofils 1 und unterhalb der Grundplatte 5, Grundplatte 5 und Hohlprofil 1 verbindende Hohlprofilsegmente 14 vorgesehen sein, die eine Anschlagmittelaufnahme zum Anheben der Unterdruckhandhabungsvorrichtung ausbilden. So kann beispielsweise ein Seil, Ketten Hebebänder o.ä. als Anschlagmittel durch die Hohlprofilsegmente durchgeführt werden, wodurch die Unterdruckhandhabungsvorrichtung einfach angehoben werden kann, da die Hohlprofilsegmente 14 in mehrere Raumrichtungen einen Anschlag für das Anschlagmittel bilden. Durch die seitliche Anordnung der Hohlprofilsegmente 14 sind sowohl die Wartungsöffnungen 10 als auch die Saugvorrichtung 4 auch während des Anhebens noch zugänglich.

## Patentansprüche

1. Unterdruckhandhabungsvorrichtung mit einem Hohlprofil (1), wenigstens zwei Sauggreifern (2), die über eine Unterdruckleitung (3) für eine Saugvorrichtung (4) mit Unterdruck beaufschlagbar sind, und einer Grundplatte (5), an welche die Unterdruckleitung (3) angeschlossen ist und die eine Andockfläche (6) für die Saugvorrichtung (4) aufweist, die mit Haltemitteln (7) auf der Andockfläche (6) festlegbar ist, **dadurch gekennzeichnet, dass** die wenigstens zwei Sauggreifer dem Hohlprofil entlang einer Hohlprofilunterseite zugeordnet sind, und dass die Grundplatte auf der den Sauggreifern gegenüberliegenden Hohlprofiloberseite angeordnet ist**.**

2. Unterdruckhandhabungsvorrichtung nach Anspruch 1, **dadurch gekennzeichnet, dass** die Unterdruckleitung (3) an wenigstens einen an der Grundplatte (5) befestigten Anschlussnippel (8) angeschlossen ist.

3. Unterdruckhandhabungsvorrichtung nach Anspruch 1 oder 2, **dadurch gekennzeichnet, dass** je Sauggreifer (2) eine Unterdruckleitung (3) an die Grundplatte (5) angeschlossen ist.

4. Unterdruckhandhabungsvorrichtung nach einem der Ansprüche 1 bis 3, **dadurch gekennzeichnet, dass** die Unterdruckleitung (3) je Sauggreifer (2) einen im Hohlprofil (1) über dem Sauggreifer (2) befestigten Sauggreiferanschlussnippel (9) umfasst, der in das Innere des Sauggreifers (2) ausmündet.

5. Unterdruckhandhabungsvorrichtung nach Anspruch 4, **dadurch gekennzeichnet, dass** das Hohlprofil (1) auf der den Sauggreiferanschlussnippeln (9) gegenüberliegenden Hohlprofilseite als Wartungsöffnungen (10) dienende Durchbrüche aufweist.

6. Unterdruckhandhabungsvorrichtung nach Anspruch 4 oder 5, **dadurch gekennzeichnet, dass** die Sauggreiferanschlussnippel (9) je über eine Unterdruckleitung (3) mit einem Anschlussnippel (8) der Grundplatte (5) verbunden sind.

7. Unterdruckhandhabungsvorrichtung nach einem der Ansprüche 1 bis 6, **dadurch gekennzeichnet, dass** die Sauggreifer (2) am Hohlprofil (1) angeordnete, eine Saugglocke (11) um ein Saugloch (12) einfassende Dichtungsprofile (13) umfassen.

8. Unterdruckhandhabungsvorrichtung nach einem der Ansprüche 1 bis 7, **dadurch gekennzeichnet, dass** das Haltemittel (7) zum Festlegen der Saugvorrichtung (4) auf der Andockfläche (6) wenigstens ein von der Grundplatte (5) aufragender Haltebügel ist, der vorzugsweise über eine Schraubverbindung, mit der Saugvorrichtung (4) lösbar verbindbar ist.

9. Unterdruckhandhabungsvorrichtung nach einem der Ansprüche 1 bis 7, **dadurch gekennzeichnet, dass** das Haltemittel (7) zum Festlegen der Saugvorrichtung (4) auf der Andockfläche (6) wenigstens ein die Grundplatte (5) und die Saugvorrichtung (4) umfassender Gurt ist, der vorzugsweise über eine Spannvorrichtung verfügt.

10. Unterdruckhandhabungsvorrichtung nach einem der Ansprüche 1 bis 9, **dadurch gekennzeichnet, dass** seitlich des Hohlprofils (1) und unterhalb der Grundplatte (5), Grundplatte (5) und Hohlprofil (1) verbindende Hohlprofilsegmente (14) vorgesehen sind, die eine Anschlagmittelaufnahme zum Anheben der Unterdruckhandhabungsvorrichtung ausbilden.

## Claims

1. Vacuum handling device with a hollow profile (1), at least two vacuum grippers (2) that can be supplied with vacuum via a vacuum line (3) for a suction device (4), and a base plate (5) to which the vacuum line (3) is connected and which has a docking surface (6) for the suction device (4), which can be secured to the docking surface (6) with retaining means (7), **characterized in that** the at least two vacuum grippers are assigned to the hollow profile along a hollow profile underside, and **in that** the base plate is arranged on the hollow profile top side opposite the vacuum grippers.

2. Vacuum handling device according to claim 1, **characterized in that** the vacuum line (3) is connected to at least one connection nipple (8) attached to the base plate (5).

3. Vacuum handling device according to claim 1 or 2, **characterized in that** one vacuum line (3) is connected to the base plate (5) for each vacuum gripper (2).

4. Vacuum handling device according to one of claims 1 to 3, **characterized in that** the vacuum line (3) comprises one vacuum gripper connection nipple (9) per vacuum gripper (2), which is attached in the hollow profile (1) above the vacuum gripper (2) and opens into the interior of the vacuum gripper (2).

5. Vacuum handling device according to claim 4, **characterized in that** the hollow profile (1) has openings on the side of the hollow profile opposite the vacuum gripper connection nipples (9) which serve as maintenance openings (10).

6. Vacuum handling device according to claim 4 or 5, **characterized in that** the vacuum gripper connection nipples (9) are each connected via a vacuum line (3) to a connection nipple (8) of the base plate (5).

7. Vacuum handling device according to one of claims 1 to 6, **characterized in that** the vacuum grippers (2) comprise sealing profiles (13) arranged on the hollow profile (1) and surrounding a vacuum bell (11) around a suction hole (12).

8. Vacuum handling device according to one of claims 1 to 7, **characterized in that** the retaining means (7) for securing the suction device (4) to the docking surface (6) is at least one retaining bracket projecting from the base plate (5), which can preferably be detachably connected to the suction device (4) via a screw connection.

9. Vacuum handling device according to one of claims 1 to 7, **characterized in that** the retaining means (7) for securing the suction device (4) to the docking surface (6) comprises at least one strap encompassing the base plate (5) and the suction device (4), which preferably has a tensioning device.

10. Vacuum handling device according to one of claims 1 to 9, **characterized in that** hollow profile segments (14) connecting the base plate (5) and the hollow profile (1) are provided on the side of the hollow profile (1) and below the base plate (5), which form a stop means receptacle for lifting the vacuum handling device.

## Revendications

1. Manipulateur sous vide ayant un profil creux (1), au moins deux pinces d'aspiration (2) qui peuvent être alimentées en vide par l'intermédiaire d'une conduite à vide (3) pour un dispositif d'aspiration (4), et une plaque de base (5) à laquelle est raccordée la conduite à vide (3) et qui présente une surface d'ancrage (6) pour le dispositif d'aspiration (4), qui peut être fixée avec des moyens de retenue (7) sur la surface d'ancrage (6), **caractérisé en ce que** les au moins deux pinces d'aspiration sont associées au profil creux le long d'une face inférieure du profil creux et **en ce que** la plaque de base est disposée sur la face supérieure du profil creux opposée aux pinces.

2. Manipulateur sous vide selon la revendication 1, **caractérisé en ce que** la conduite à vide (3) est raccordée à au moins un raccord de connexion (8) fixé à la plaque de base (5).

3. Manipulateur sous vide selon la revendication 1 ou 2, **caractérisé en ce qu'**une conduite à vide (3) est raccordée à la plaque de base (5) pour chaque pince (2).

4. Manipulateur sous vide selon l'une des revendications 1 à 3, **caractérisé en ce que** la conduite à vide (3) comprend, pour chaque pince (2), un raccord de pince (9) fixé dans le profil creux (1) au-dessus de la pince (2) et débouchant à l'intérieur de la pince (2).

5. Manipulateur sous vide selon la revendication 4, **caractérisé en ce que** le profil creux (1) présente, sur le côté du profil creux opposé aux raccords de pince (9), des ouvertures (10) servant de passages de ventilation.

6. Manipulateur sous vide selon la revendication 4 ou 5, **caractérisé en ce que** les raccords de pinces (9) sont chacun reliés par une conduite à vide (3) à un raccord (8) de la plaque de base (5).

7. Manipulateur sous vide selon l'une des revendications 1 à 6, **caractérisé en ce que** les pinces (2) disposées sur le profil creux (1) comprennent des profils d'étanchéité (13) entourant une cloche d'aspiration (11) autour d'un trou d'aspiration (12).

8. Manipulateur sous vide selon l'une des revendications 1 à 7, **caractérisé en ce que** le moyen de fixation (7) pour fixer le dispositif d'aspiration (4) sur la surface d'ancrage (6) est au moins un étrier de fixation s'élevant depuis la plaque de base (5), qui peut être relié de manière amovible au dispositif d'aspiration (4) de préférence via un raccord vissé.

9. Manipulateur sous vide selon l'une des revendications 1 à 7, **caractérisé en ce que** le moyen de fixation (7) pour fixer le dispositif d'aspiration (4) sur la surface d'ancrage (6) est au moins une sangle comprenant la plaque de base (5) et le dispositif d'aspiration (4), qui dispose de préférence d'un dispositif de serrage.

10. Manipulateur sous vide selon l'une des revendications 1 à 9, **caractérisé en ce que**, sur le côté du profil creux (1) et sous la plaque de base (5), des segments de profil creux (14) reliant la plaque de base (5) et le profil creux (1) sont prévus, qui forment un logement pour un moyen de levage destiné à soulever le dispositif de manipulation sous vide.
